# EUROPÄISCHE PATENTSCHRIFT

(11) **EP 0 866 477 B1**
(45) Veröffentlichungstag und Bekanntmachung des Hinweises auf die Patenterteilung: **04.12.2002**
(21) Anmeldenummer: 98103720.3
(22) Anmeldetag: 03.03.1998
(51) Int. Cl.: H01G 2/06, H01G 2/10

(54) **SMD-Folienkondensator**
SMD-film capacitor
Condensateur à film monté en surface

(30) Priorität: 17.03.1997 DE 19710963
(43) Veröffentlichungstag der Anmeldung: 23.09.1998
(73) Patentinhaber: Westermann, Wolfgang, 68165 Mannheim (DE)
(72) Erfinder: Westermann, Wolfgang, 68165 Mannheim (DE)
(74) Vertreter: Altenburg, Udo, Dipl.-Phys.

(56) Entgegenhaltungen:
- EP-A- 0 332 411
- DE-A- 3 546 453
- DE-C- 3 505 883
- PATENT ABSTRACTS OF JAPAN vol. 014, no. 168 (E-0912), 30.März 1990 & JP 02 026012 A (ELNA CO LTD), 29.Januar 1990,
- PATENT ABSTRACTS OF JAPAN vol. 017, no. 579 (E-1451), 21.Oktober 1993 & JP 05 175086 A (NEC CORP), 13.Juli 1993,

## Beschreibung

Die vorliegende Erfindung betrifft Folienkondensatoren aller Art, d.h. in Film/Folien- oder metallisierter Ausführungsform in Wickel- oder Schichtbauweise mit gießharzvergossener Becherumhüllung oder Umhüllung aus duroplastischem Material mit axialen oder radialen Anschlußdrähten in SMD-Bauweise.

Seit mehr als 15 Jahren versucht man, Folienkondensatoren verschiedener Bauart in SMD-Bauweise auszuführen. Aus der DE-PS 33 20 257 ist ein Kunststoffolien-Wickelkondensator in SMD-Bauweise mit einer Umhüllung aus duroplastischem Material, z.B. Epoxidharzpreßmassen bekannt, bei dem ein Anschlußelement aus dünnem Blech einerseits mit der Schoopschicht des Kondensatorkörpers und andererseits flächig an der Außenseite der duroplastischen Umhüllung angebracht ist.

Aus der DE-PS 35 05 888 ist ein Kunststoffolien-Wickelkondensator in SMD-Bauweise bekannt, bei dem ein radial bedrahteter Kunststoffolien-Wickelkondensatorkörper mit einer gießharzvergossenen Becherumhüllung vorgesehen ist, dessen Anschlußdrähte um 180° umgebogen und auf einander gegenüberliegenden Schmalseiten der Becherumhüllung jeweils mit einem Anschlußblechabschnitt verbunden sind.

Bei einer Bestückung einer Platine wird heute in der Regel eine Mischbestückung vorgenommen, d.h. es werden sowohl radial bedrahtete Bauelemente, insbesondere radial bedrahtete Folienkondensatoren und SMD-Bauelemente, insbesondere SMD-Folienkondensatoren auf die Platine aufgebracht. Insofern besteht in der Praxis ein Bedürfnis, Folienkondensatoren weitgehend beliebiger Bauart sowohl als bedrahtete Folienkondensatoren als auch als SMD-Folienkondensatoren zur Verfügung zu haben. Im Hinblick auf die Tatsache, daß es sich bei Kondensatoren um Massenartikel handelt, die heute einem großen Preisdruck, auch in den qualitativ anspruchsvolleren Ausführungsformen ausgesetzt sind, ist es weiterhin erforderlich, bei der Zurverfügungstellung von bedrahteten und SMD-Folienkondensatoren produktionstechnisch möglichst kostensparend vorzugehen.

Die vorliegende Erfindung ist daher darauf gerichtet, bedrahtete Folienkondensatoren in einfacher Weise auch als SMD-Folienkondensatoren zur Verfügung zu stellen.

Dies wird erfindungsgemäß durch einen Folienkondensator gemäß Anspruch 1 erzielt. Hierdurch ist es erfindungsgemäß möglich, den als Fertigbauteil vorliegenden bedrahteten Folienkondensator, der grundsätzlich nach Prüfung aller elektrischen Parameter und auch nach allen Bedruckungsvorgängen für den Versand und Einsatz bereit ist, in einfacher Weise durch Anordnung in einer Becherumhüllung, Umbiegen seiner Anschlußdrähte auf einander gegenüberliegende Außenseiten der Becherumhüllung und dortige Verbindung mit einem Anschlußblechabschnitt in einen SMD-Folienkondensator umzuwandeln. Falls erwünscht, kann diese Umwandlung eines bedrahteten Follenkondensators in einen erfindungsgemäßen SMD-Folienkondensator auch vor Ort beim Kunden bei der Bestückung von Platinen vorgenommen werden, da gegebenenfalls erst dieser zu entscheiden hat, ob der gewünschte Folienkondensator in bedrahteter oder in SMD-Bauweise auf die Platine aufgebracht werden soll. Dieser Aspekt der vorliegenden Erfindung ist besonders deshalb wirtschaftlich wertvoll, da in der vorliegenden Branche immer mehr Spezialfirmen sich allein auf die Bestückung von Platinen konzentrieren.

Die Hybridbauweise des erfindungsgemäßen Kondensators hat gegenüber nicht umhüllten oder einfach umhüllten SMD-Bauformen auch den Vorteil eines verstärkten Wärmeschutzes, der insbesondere dann von Bedeutung ist, wenn der SMD-Folienkondensator aus wärmeempfindlichen Folien, wie z.B. Polypropylen besteht.

Vorteilhafte Ausgestaltungen der erfindungsgemäßen Kondensatoren sind in den abhängigen Ansprüchen 2 bis 11 angeführt.

Der abhängige Anspruch 4 richtet sich auf eine besonders vorteilhafte Ausführungsform der vorliegenden Erfindung, nämlich auf einen erstmalig in SMD-Bauweise ausgeführten Metallpapier-Wickelkondensator, der als Funk-Entstörkondensator insbesondere am Netzeingang von elektrischen Geräten als Sicherheitsbauteil zur Vermeidung einer Brandgefahr dient.

Ein Verfahren zur Herstellung des erfindungsgemäßen SMD-Folienkondensators ist in Anspruch 12 angeführt.

Weitere Vorteile, Merkmale und Anwendungsmöglichkeiten der vorliegenden Erfindung ergeben sich aus der nachfolgenden Beschreibung eines Ausführungsbeispiels in Verbindung mit der Zeichnung. Darin zeigen:
- Fig. 1: ein bekannter bedrahteter Metallpapier-Funk-Entstörkondensator,
- Fig. 2: schematisch in weggebrochener perspektivischer Darstellung den Kondensator gemäß Fig. 1 in einer Becherumhüllung,
- Fig. 3: einen Querschnitt längs der Linie III-III der Fig. 2 mit nockenartigen Vorsprüngen zur Fixierung des Kondensators in der Becherumhüllung,
- Fig. 4: schematisch in perspektivischer Darstellung den Kondensator gemäß Fig. 1 in einer gießharzvergossenen Becherumhüllung mit umgebogenen Anschlußdrähten und schematisch dargestellten Blechabschnitten vor ihrer Verbindung mit den Anschlußdrähten,
- Fig. 5: eine der Fig. 4 entsprechende perspektivische Darstellung des erfindungsgemäßen SMD-Folienkondensators und
- Fig. 6: einen Querschnitt längs der Linie VI-VI der Fig. 5.

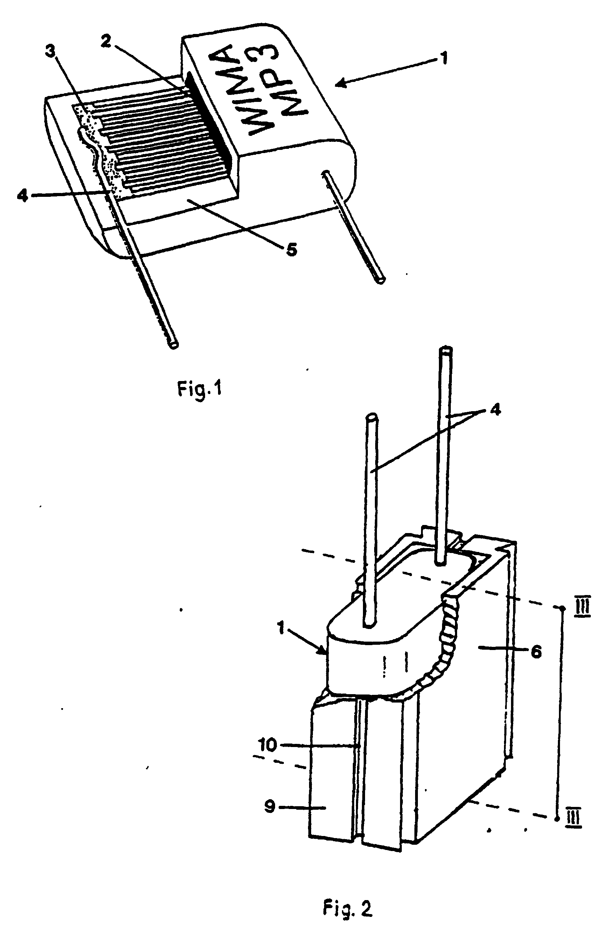

In Fig. 1 ist ein Metallpapier-Funk-Entstörkondensator 1 dargestellt, wie er von der Firma Wilhelm Westermann unter dem Warenzeichen WIMA MP 3 vertrieben wird. Dieser Metallpapier-Funk-Entstörkondensator 1 weist einen Kondensatorkörper 2 aus metallisiertem Kondensatorpapier auf, welches mit Epoxidharz imprägniert ist. Von den Schoopschichten 3 des Kondensatorkörpers 2 führen radiale Anschlußdrähte 4 durch eine Umhüllung 5 aus flammhemmendem Epoxidharz, zusätzlich mit einer äußeren Metallfolie umhüllt, nach außen.

Dieser Metallpapier-Funk-Entstörkondensator 1 wird, wie dies in Fig. 2, 3 und Fig. 4 bis 6 in zwei Ausführungsbeispielen dargestellt ist, in einer zum Umbau in ein SMD-Bauteil dienenden Becherumhüllung 6 aufgenommen. Für die Becherumhüllung 6 ist ein Kunststoffmaterial gewählt, das gegenüber den thermischen Belastungen, die bei den gängigsten SMD-Lötverfahren auftreten, eine genügende Widerstandsfähigkeit bzw. Belastbarkeit aufweist. Geeignete Kunststoffmaterialien sind, neben duroplastischen Materialien, thermoplastische Kunststoffe mit Schmelzpunkten oberhalb von 250 °C, wie Polyphenylensulfid, Polyamid u.a.

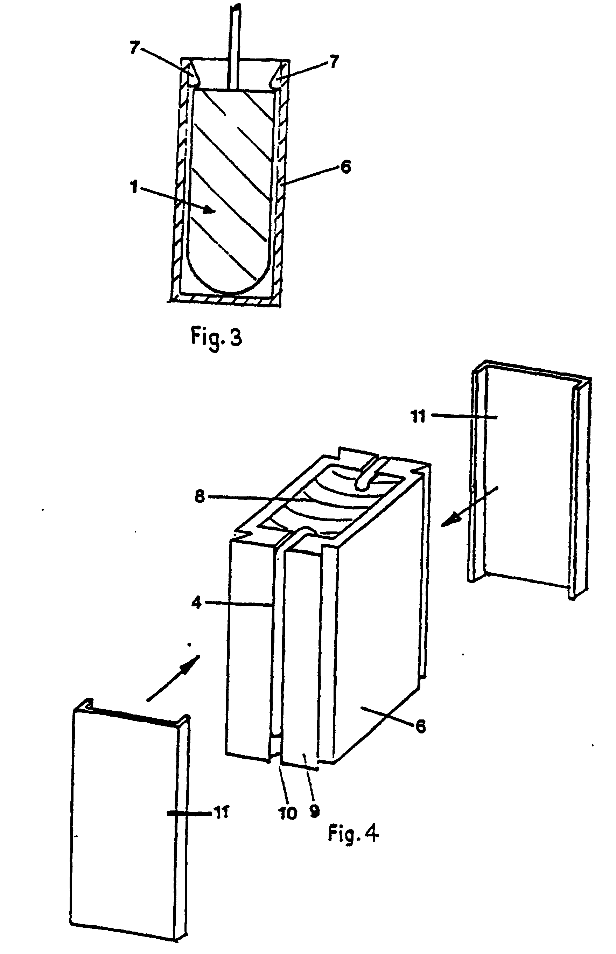

Die Fixierung des bedrahteten Folienkondensators, wie z.B. des in Fig. 1 dargestellten Metallpapier-Funk-Entstörkondensators 1, in der Becherumhüllung 6 kann durch rein mechanische Hilfsmittel, wie z.B. elastische nockenartige Vorsprünge 7 auf der Innenseite der Becherumhüllung 6 (Snap In Prinzip) erfolgen, wie dies aus Fig. 3 hervorgeht. Die Fixierung kann auch durch eine Vergußmasse 8 aus aushärtbarem Polyester- oder Epoxidharz, anderen geeigneten Kunstharzen oder Bitumen erfolgen, wie dies aus dem Ausführungsbeispiel gemäß Fig. 4 bis 6 hervorgeht. Denkbar und vorteilhaft erscheint auch eine Kombination aus mechanischer Fixierung und anschließendem Verguß.

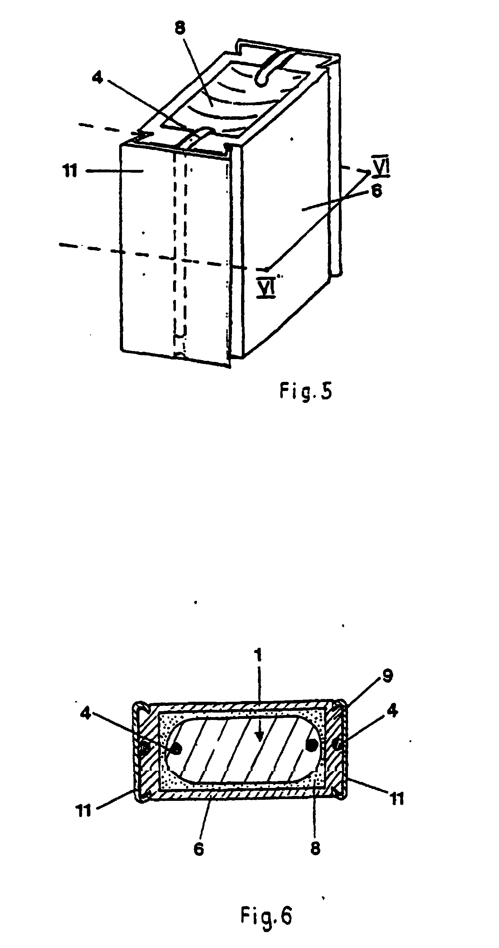

Die Schmalseiten 9 der Becherumhüllung 6 sind schwalbenschwanzförmig ausgebildet, d.h. sie weisen an ihren seitlichen Längskanten schwalbenschwanzartige Hinterschneidungen auf. Die Schmalseiten 9 werden jeweils durch eine Längsnut 10 geteilt, die einrastbar (der Querschnitt der Längsnut 10 ist etwas geringer als der Querschnitt der Anschlußdrähte 4) ausgeführt ist und zur Aufnahme des Anschlußdrahtes 4 dient. Die beiden Anschlußdrähte 4 werden um 180° umgebogen und in die einrastbaren Längsnuten 10 hineingelegt. Auf die Schmalseiten 9 der Becherumhüllung 6 und über die eingelegten Anschlußdrähte 4 werden glatte, rechteckige, verzinnte Blechabschnitte 11 aufgebracht, wie aus den Fig. 4 bis 6 hervorgeht. Umgebogene Randbereiche der Blechabschnitte 11 greifen in die schwalbenschwanzartigen Hinterschneldungen der Schmalseiten 9 der Becherumhüllung 6 ein, wodurch die Blechabschnitte 11 an der Becherumhüllung 6 befestigt und mit den Anschlußdrähten 4 verbunden werden. Die Blechabschnitte 11 und die darunterliegenden Anschlußdrähte 4 stehen, da die Anschlußdrähte 4 etwas über die Längsnut 10 hinausragen, wie dies insbesondere aus Fig. 6 hervorgeht, miteinander in Druckkontakt. Durch ein geeignetes Verfahren können die Blechabschnitte 11 und die darunterliegenden Anschlußdrähte 4 anschließend miteinander verschweißt werden. Der fertige SMD-Kondensator, ein Metallpapierkondensator in Hybridbauweise, ist schematisch in Fig. 5 und im Querschnitt längs der Linie VI-VI der Fig. 5 in Fig. 6 dargestellt.

## Patentansprüche

1. Folienkondensator in Film/Folien- oder metallisierter Ausführungsform in Wickel- oder Schichtbauweise mit Becherumhüllung oder Umhüllung aus duroplastischem Material mit axialen oder radialen Anschlußdrähten, **dadurch gekennzeichnet, daß** der als Fertigbauteil nach Prüfung aller elektrischen Parameter vorliegende umhüllte Folienkondensator (1) in einer zweiten, als Becher (6) ausgebildeten Umhüllung aufgenommen ist und daß die Anschlußdrähte (4) auf einander gegenüberliegenden Außenseiten (9) dieser zweiten Becherumhüllung (6) umgebogen und dort jeweils mit einem Anschlußblechabschnitt (11) verbunden sind.

2. Folienkondensator nach Anspruch 1, **dadurch gekennzeichnet, daß** der als Fertigbauteil vorliegende umhüllte Folienkondensator (1) in einer gießharzvergossenen Becherumhüllung (6, 8) aufgenommen ist.

3. Folienkondensator nach Anspruch 1, **dadurch gekennzeichnet, daß** der als Fertigbauteil vorliegende umhüllte Folienkondensator (1) in einer Becherumhüllung (6) mit elastischen nockenartigen Vorsprüngen (7) auf deren Innenseite aufgenommen ist.

4. Folienkondensator nach Anspruch 1, **dadurch gekennzeichnet, daß** der als Fertigbauteil vorliegende umhüllte Folienkondensator (1) ein Metallpapier-Wickelkondensator mit einer Umhüllung aus duroplastischem Material mit radialen Anschlußdrähten ist, der in einer zweiten gießharzvergossenen Becherumhüllung (6, 8) aufgenommen ist, und daß die radialen Anschlußdrähte (4) um 180° umgebogen und auf einander gegenüberliegenden Außenseiten (9) der Becherumhüllung (6) jeweils mit einem Anschlußblechabschnitt (11) verbunden sind.

5. Folienkondensator nach einem der Ansprüche 1 bis 4, **dadurch gekennzeichnet, daß** die Anschlußdrähte (4) zu den an die Öffnung der Becherumhüllung (6) angrenzenden Schmalseiten (9) des Kondensators hin umgebogen sind.

6. Folienkondensator nach einem der Ansprüche 1 bis 5, **dadurch gekennzeichnet, daß** auf den Außenseiten (9) der Becherumhüllung (6) jeweils eine Längsnut (10) vorgesehen ist, in welche der umgebogene Anschlußdraht (4) eingefügt ist.

7. Folienkondensator nach Anspruch 6, **dadurch gekennzeichnet, daß** der Querschnitt der Längsnut (10) etwas geringer als der Querschnitt des Anschlußdrahtes (4) ist.

8. Folienkondensator nach einem der Ansprüche 5 bis 7, **dadurch gekennzeichnet, daß** die Schmalseiten (9) der Becherumhüllung (6) schwalbenschwanzartige Hinterschneidungen aufweisen, in welche umgebogene Randbereiche der Blechabschnitte (11) eingreifen.

9. Folienkondensator nach einem der Ansprüche 1 bis 8, **dadurch gekennzeichnet, daß** die Blechabschnitte (11) mit den Anschlußdrähten (4) verschweißt sind.

10. Folienkondensator nach einem der Ansprüche 1 bis 9, **dadurch gekennzeichnet, daß** die Becherumhüllung (6) aus einem duroplastischen Material oder einem thermoplastischen Material mit einem Schmelzpunkt oberhalb von 250 °C wie z.B. Polyphenylensulfid oder Polyamid besteht.

11. Folienkondensator nach einem der Ansprüche 1 bis 10, **dadurch gekennzeichnet, daß** die Anschlußdrähte (4) aus einem schlecht wärmeleitenden Material, z.B. aus Neusilber, bestehen.

12. Verfahren zur Herstellung eines bedrahteten Folienkondensators in Film/Folien- oder metallisierter Ausführungsform in Wickel- oder Schichtbauweise mit Becherumhüllung oder Umhüllung aus duroplastischem Material mit axialen oder radialen Anschlußdrähten, **dadurch gekennzeichnet, daß** der als Fertigbauteil nach Prüfung aller elektrischen Parameter vorliegende umhüllte Folienkondensator in eine zweite, als Becher ausgebildete Umhüllung eingeführt wird, seine Anschlußdrähte auf einander gegenüberliegende Außenseiten der Becherumhüllung umgebogen und dort jeweils mit einem Anschlußblechabschnitt verbunden werden.

## Claims

1. Foil capacitor in film/foil or metallised embodiment constructed by winding or layering, having a beaker casing or casing made of duroplastic material with axial or radial connecting wires, **characterised in that** the encased foil capacitor (1) in the state of a finished component after testing of all electrical parameters is received in a second casing formed as a beaker (6) and **in that** the connecting wires (4) are bent back on opposite external sides (9) of this beaker casing (6) and are there connected to a respective connecting sheet-metal section (11).

2. Foil capacitor according to claim 1, **characterised in that** the encased foil capacitor (1) in the state of a finished component is received in a beaker casing (6, 8) cast from casting resin.

3. Foil capacitor according to claim 1, **characterised in that** the encased foil capacitor (1) in the state of a finished component is received in a beaker casing (6) with resilient, cam-like projections (7) on its inner face.

4. Foil capacitor according to claim 1, **characterised in that** the encased foil capacitor (1) in the state of a finished component is a metallic-paper winding capacitor with a casing made of duroplastic material with radial connecting wires, which is received in a second beaker casing (6, 8) cast from casting resin, and **in that** the radial connecting wires (4) are bent through 180° and are connected to respective connecting sheet metal sections (11) on opposite external sides (9) of the beaker casing (6).

5. Foil capacitor according to one of claims 1 to 4, **characterised in that** the connecting wires (4) are bend back towards the narrow sides (9) of the capacitor abutting the aperture of the beaker casing (6).

6. Foil capacitor according to one of claims 1 to 5, **characterised in that** a respective longitudinal groove (10) is provided on each external side (9) of the beaker casing (6), into which groove the bent-back connecting wire (4) is inserted.

7. Foil capacitor according to claim 6, char the cross-section of the longitudinal groove (10) is slightly smaller than the cross-section of the connecting wire (4).

8. Foil capacitor according to one of claims 5 to 7, **characterised in that** the narrow sides (9) of the beaker casing (6) have dove-tailed undercuts into which bent-back edge regions of the sheet-metal sections (11) engage.

9. Foil capacitor according to one of claims 1 to 8, **characterised in that** the sheet-metal sections (11) are welded to the connecting wires (4).

10. Foil capacitor according to one of claims 1 to 9, **characterised in that** the beaker casing (6) consists of a duroplastic material or a thermoplastic material with a melting point of more than 250°C, e.g polyphenylene sulphide or polyamide.

11. Foil capacitor according to one of claims 1 to 10, **characterised in that** the connecting wires (4) consist of a material which is a poor conductor of heat, e.g. nickel.

12. Method of manufacturing a wired foil capacitor in film/foil or metallised embodiment constructed by winding or layering, having a beaker casing or casing made of duroplastic material with axial or radial connecting wires, **characterised in that** the encased foil capacitor in the state of a finished component after testing of all electrical parameters is inserted into a second casing formed as a beaker and **in that** the connecting wires are bent back on opposite external sides of this beaker casing and are there connected to a respective connecting sheet-metal section.

## Revendications

1. Condensateur à feuilles agencé selon une forme de réalisation formée de films/feuilles ou métallisée, selon une construction enroulée ou en couche, comportant une enveloppe en forme de pot ou une enveloppe formée d'une matière plastique durcissable comportant des fils de raccordement axiaux ou radiaux, **caractérisé en ce que** le condensateur à feuilles enveloppé (1) présent sous la forme d'un composant terminé après contrôle de tous les paramètres électriques, est logé dans une seconde enveloppe réalisée sous la forme d'un pot (6), et que les fils de raccordement (4) sont repliés sur des côtés extérieurs (9), qui sont situés à l'opposé l'une de l'autre, de cette seconde enveloppe en forme de pot (6) et sont reliées en cet endroit respectivement à une section dn tôle de raccordement (11).

2. Condensateur à feuilles selon la revendication 1, **caractérisé en ce que** le condensateur à feuilles enveloppé (1), qui est présent en tant que composant terminé, est logé dans une enveloppe en forme de pot (6, 8) scellée dans une résine de coulée.

3. Condensateur à feuilles selon la revendication 1, **caractérisé en ce que** le condensateur à feuilles enveloppé (1) présent la forme d'un composant terminé, est logé dans une enveloppe en forme de pot (6) comportant des parties saillantes élastiques en forme de came (7) sur sa face intérieure.

4. Condensateur à feuilles selon la revendication 1, **caractérisé en ce que** le condensateur à feuilles enveloppé (1) présent sous la forme d'un composant terminé est un condensateur bobiné métal-papier comportant une enveloppe formée d'une matière plastique durcissable et comportant des fils radiaux de raccordement, qui est logée dans une seconde enveloppe en forme de pot (6, 8) scellée dans une résine de coulée et que les fils radiaux de raccordement (4) sont repliés à 180° et sont reliés, sur des côtés extérieurs (9), qui sont situés à l'opposé l'un de l'autre, de l'enveloppe en forme de pot (6), respectivement à une section de tôle de raccordement (11).

5. Condensateur à feuilles selon l'une des revendications 1 à 4, **caractérisé en ce que** les fils de raccordement (4) sont repliés sur les petits côtés (9) du condensateur qui jouxtent l'ouverture de l'enveloppe en forme de pot (6).

6. Condensateur à feuilles selon l'une des revendications 1 à 5, **caractérisé en ce que** sur les côtés extérieurs (9) de l'enveloppe en forme de pot (6) est prévue respectivement une rainure longitudinale (10), dans laquelle est inséré le fil de raccordement replié (4).

7. Condensateur à feuilles selon la revendication 6, **caractérisé en ce que** la section transversale de la rainure longitudinale (10) est légèrement inférieure à la section transversale du fil de raccordement (4).

8. Condensateur à feuilles selon l'une des revendications 5 à 7, **caractérisé en ce que** les petits côtés (9) de l'enveloppe en forme de pot (6) possèdent des parties en contre-dépouille en forme de queue d'aronde, dans lesquelles s'engagent les parties marginales repliées des sections de tôle (11).

9. Condensateur à feuilles selon l'une des revendications 1 à 8, **caractérisé en ce que** les sections de tôle (11) sont soudées aux fils de connexion (4).

10. Condensateur à feuilles selon l'une des revendications 1 à 9, **caractérisé en ce que** l'enveloppe en forme de pot (6) est constituée par une matière plastique durcissable ou une matière thermoplastique comportant un point de fusion supérieur à 250°C, comme par exemple du sulfure de polyvinylidène ou du polyamide.

11. Condensateur à feuilles selon l'une des revendications 1 à 10, **caractérisé en ce que** les fils de raccordement (4) sont constitués par un matériau qui est un mauvais conducteur thermique, par exemple de l'argentan.

12. Procédé pour fabriquer un condensateur à feuilles câblé dans la forme de réalisation à films/feuilles ou métallisée, selon une construction enroulée ou en couche comportant une enveloppe en forme de pot ou une enveloppe formée d'une matière plastique durcissable comportant des fils de raccordement axiaux ou radiaux, **caractérisé en ce que** le condensateur à feuilles enveloppé présent en tant que composant terminé après le contrôle de tous les paramètres électriques, est introduit dans une seconde enveloppe agencée sous la forme d'un pot, que ces fils de raccordement sont repliés sur des côtés extérieurs, qui sont à l'opposé l'une de l'autre, de l'enveloppe en forme de pot et sont reliés en cet endroit respectivement à une section de tôle de raccordement.
